# EUROPÄISCHE PATENTANMELDUNG

(11) **EP 1 014 158 A1**
(43) Veröffentlichungstag der Anmeldung: **28.06.2000**
(21) Anmeldenummer: 99124366.8
(22) Anmeldetag: 07.12.1999
(51) Int. Cl.: G02F 1/1335

(54) **Anzeigeeinrichtung**

(30) Priorität: 22.01.1999 DE 19902473; 22.12.1998 DE 19859341
(71) Anmelder: Mannesmann VDO Aktiengesellschaft, 60388 Frankfurt am Main (DE)
(72) Erfinder: Hähl, Manfred, 63165 Mühlheim (DE)
(74) Vertreter: Rassler, Andrea, Dipl.-Phys.

(57) **Zusammenfassung**

Bei einer mittels einer Leuchtstofflampe (1) beleuchtbaren Anzeigeeinrichtung (3) tritt das Licht durch eine Apertur (2) der Leuchtstofflampe (1) in ein optisches Element (5). Von dort gelangt das Licht in eine Flüssigkristallanzeige (6). Die dort erzeugte Bilddarstellung kann mittels einer Abbildungsoptik (7) beispielsweise in eine nicht dargestellte Frontscheibe eines Kraftfahrzeuges eingespiegelt werden. Durch diese optimale Nutzung des aus der Apertur (2) austretenden Lichtes lassen sich erheblich größere Beleuchtungsstärken als bei herkömmlichen Anzeigen erreichen. Daher kann die Anzeigeeinrichtung (3) auch zur Darstellung von farbigen Abbildungen mittels einer als Farb-LCD ausgeführten Flüssigkristallanzeige (6) verwendet werden.

## Beschreibung

Die Erfindung betrifft eine Anzeigeeinrichtung, insbesondere für ein Fahrzeug, mit einer Flüssigkristallanzeige, welche eine in ein optisches Element zur Beleuchtung der Flüssigkristallanzeige einstrahlende Leuchtstofflampe aufweist, die in ihrem Inneren mit einer Beschichtung zur Umwandlung von UV-Licht in sichtbares Licht versehen ist.

Bei heutigen Anzeigeeinrichtungen werden Leuchtstofflampen zunehmend zur Beleuchtung von Flüssigkristallanzeigen vor allem wegen des geringen Energieverbrauchs und der geringen Wärmeabstrahlung eingesetzt. Dabei hat die Leuchtstofflampe geringen Abstand von einem als Lichtleiter ausgeführten optischen Element, so dass eine gleichmäßige Verteilung des Lichtes ermöglicht wird. Über eine Lichtauskoppelfläche strahlt das Licht anschließend in einen rückwärtigen Bereich der Flüssigkristallanzeige ein.

Nachteilig wirkt sich bei der Verwendung der Leuchtstofflampe aus, dass die Beleuchtungsstärke für einige Darstellungsformen nicht ausreichend hoch ist. So erfordern beispielsweise bei Head-Up-Anwendungen in Kraftfahrzeugen Farbdisplays eine besonders hohe Beleuchtungsstärke, die sich bei herkömmlichen Anzeigeeinrichtungen zumeist nicht realisieren lässt.

Man könnte daran denken, die Beleuchtungsstärke durch leistungsstärkere Leuchtstofflampen zu erhöhen, um so eine ausreichende Helligkeit zu erreichen. Auf diese Weise könnte über eine größere Wendellänge jedoch lediglich die beleuchtbare Fläche vergrößert, nicht jedoch die Leuchtdichte auf der Oberfläche der Lampe (auf gleichbleibender Fläche) erhöht werden.

Der Erfindung liegt das Problem zugrunde, eine Anzeigeeinrichtung der eingangs genannten Art so zu gestalten, dass die mit der Leuchtstofflampe erreichbare Beleuchtungsstärke der Flüssigkristallanzeige erhöht wird. Dabei soll die Leuchtdichte auf der Oberfläche der Lampe erhöht werden.

Dieses Problem wird erfindungsgemäß dadurch gelöst, dass die Leuchtstofflampe in ihrer Beschichtung eine Ausnehmung aufweist, durch die das Licht aus der Leuchtstofflampe austritt und in das optische Element einstrahlt.

Eine solche Ausnehmung in der Beschichtung wird auch als Apertur bezeichnet.

Durch die im Bereich der Apertur fehlende Beschichtung der Leuchtstofflampe kann ein erheblich größerer Anteil des im Inneren der Leuchtstofflampe erzeugten Lichtes austreten und der Flüssigkristallanzeige mittels des optischen Elementes zugeführt werden. Die hohe Leuchtdichte im Inneren der Leuchtstofflampe kann daher mittels des Lichtleiters zur Beleuchtung der Flüssigkristallanzeige uneingeschränkt genutzt werden, so dass sich bei Verwendung gegenüber herkömmlichen Leuchtstofflampen eine wesentliche Steigerung der Beleuchtungsstärke realisieren lässt.

Weiterhin lassen sich aufgrund der hohen Beleuchtungsstärke auch sogenannte Head-Up-Displays verwirklichen, bei denen eine Abbildung in eine Frontscheibe eines Kraftfahrzeuges eingespiegelt wird.

Die Leuchtstofflampe könnte zu diesem Zweck unmittelbar benachbart zu der Flüssigkristallanzeige angeordnet sein, wobei das optische Element durch einen Reflektor oder einen einfachen Spiegel gebildet ist. Besonders vorteilhaft ist es hingegen, wenn das optische Element - beispielsweise ein Kondensor - zur Projektion des aus der Ausnehmung austretenden Lichtes auf die Flüssigkristallanzeige eine konvexe Linse aufweist. Dadurch werden die aus der Apertur der Leuchtstofflampe austretenden Lichtstrahlen gebündelt und können so auf die Flüssigkristallanzeige gerichtet werden. Verluste durch möglicherweise ungenutzt austretende und die Flüssigkristallanzeige verfehlende Lichtstrahlung entstehen daher nicht.

Eine andere besonders vorteilhafte Ausführungsform der Erfindung ist auch dadurch gegeben, dass das optische Element durch einen gegen die Ausnehmung anliegenden Lichtleiter gebildet ist.

Dabei liegt der Lichtleiter mit einer Lichteinkoppelfläche gegen die Apertur der Leuchtstofflampe und mit einer Lichtauskoppelfläche gegen die Rückseite der Flüssigkristallanzeige unmittelbar an. Die dadurch erreichbare Beleuchtungsstärke kann dabei weiter verbessert werden, wobei zugleich durch die Möglichkeit einer mit vergleichsweise geringen Verlusten behafteten Umlenkung des Lichtes eine kompakte Bauform realisiert werden kann.

Dabei ist eine besonders günstige Weiterbildung der Erfindung dann gegeben, wenn das optische Element einzelne lichtleitende Fasern aufweist.

Hierdurch können die lichtleitenden Fasern bei unterschiedlichen Anzeigeeinrichtungen flexibel eingesetzt werden und ermöglichen zugleich durch ihre Flexibilität einen Ausgleich von Zusammenbautoleranzen und eine vereinfachte Montage. Die einzelnen Fasern können hierzu beispielsweise ähnlich eines Glasfaserkabels zusammengefasst sein und ermöglichen auch die Einkopplung mehrerer Lichtquellen. Zugleich ist durch die flexible Eigenschaft solcher lichtleitenden Fasern auch eine Schwenkbewegung der Flüssigkristallanzeige beispielsweise von einer dem Fahrer zu einer dem Passagier des Kraftfahrzeuges zugewandten Position möglich.

Besonders günstig ist es auch, wenn die Anzeigeeinrichtung zur Einspiegelung einer Abbildung in die Frontscheibe eines Kraftfahrzeuges und die Flüssigkristallanzeige als eine Farb-Flüssigkristallanzeige ausgeführt ist.

Hierbei kann die mittels der Apertur erreichbare, verbesserte Beleuchtungsstärke besser für eine bisher mittels einer Leuchtstofflampe nur unzureichend realisierbare (und damit aus Gründen der Verkehrssicherheit bisher untaugliche), farbige Abbildung in der Frontscheibe genutzt werden.

Die Apertur kann sich sowohl im wesentlichen als schmaler Schlitz über die gesamte Länge der Leuchtstofflampe erstrecken als auch eine quadratische Grundfläche aufweisen und in etwa zentral angeordnet sein. Einen guten Kompromiss zwischen einer ausreichend großen Beschichtungsfläche einerseits und einer ausreichend großen Apertur andererseits lässt sich bei einer besonders günstigen Ausgestaltung der Erfindung dadurch erreichen, dass die Leuchtstofflampe einen Durchmesser von ca. 15 mm und die Ausnehmung eine Fläche zwischen 10 mm² und 100 mm² aufweist. Dabei ist es vorteilhaft, wenn die Leuchtstofflampe eine nicht zu geringe Länge (z.B. in einer Größenordnung von 100 mm) aufweist, so daß Dunkelzonen der Lampe hinreichend außerhalb des aktiven Bereichs liegen.

Hierdurch wird die zur Umwandlung der in der Leuchtstofflampe erzeugten UV-Strahlung in sichtbares Licht erforderliche Beschichtungsfläche nur unwesentlich vermindert. Andererseits ermöglicht eine solche Apertur eine optimale Beleuchtung der Flüssigkristallanzeige mit etwa der doppelten Helligkeit im Vergleich zu herkömmlichen Leuchtstofflampen.

Die Erfindung lässt verschiedene Ausführungsformen zu. Zur weiteren Verdeutlichung ihres Grundprinzips sind zwei davon in der Zeichnung dargestellt und werden nachfolgend beschrieben. Diese zeigt in
- Fig. 1: eine perspektivische Darstellung einer Leuchtstofflampe mit einer Apertur,
- Fig. 2: eine seitliche Prinzipdarstellung einer Anzeigeeinrichtung mit der in Figur 1 gezeigten Leuchtstofflampe,
- Fig. 3: eine perspektivische Darstellung einer weiteren Leuchtstofflampe mit einer Apertur und einem angeschlossenen Lichtleiter,
- Fig. 4: eine seitliche Prinzipdarstellung einer Anzeigeeinrichtung mit der in Figur 3 gezeigten Leuchtstofflampe.

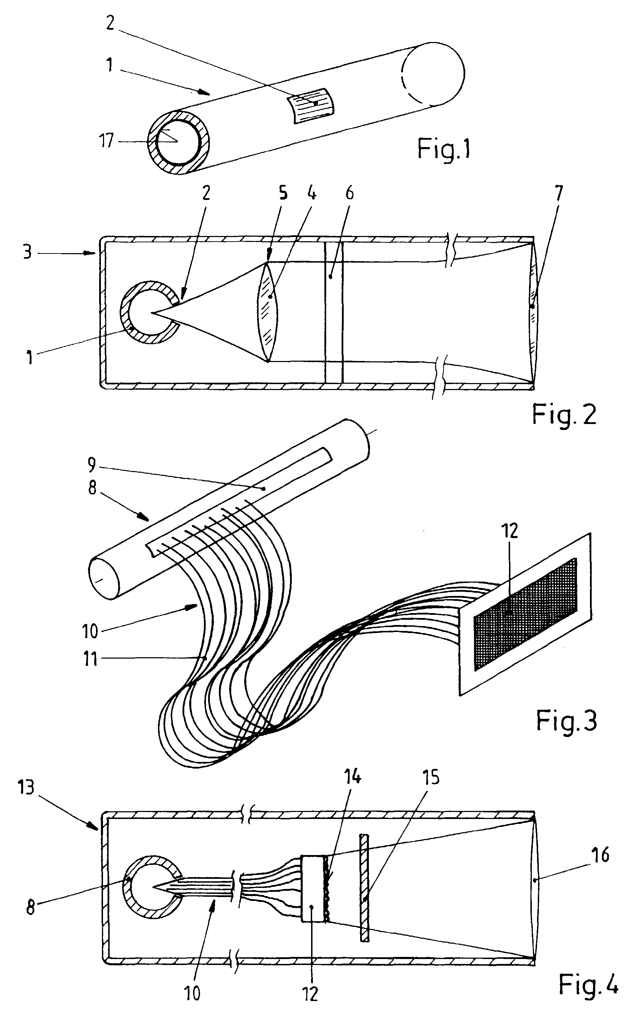

Figur 1 zeigt in einer perspektivischen Darstellung eine Leuchtstofflampe 1 mit einer inneren Beschichtung 17 zur Umwandlung von UV-Licht in sichtbares Licht, die üblicherweise aus einer Phosphorverbindung besteht. In dieser Beschichtung 17 ist eine in etwa quadratische Apertur 2 vorhanden. Die Apertur 2 dient dem Austritt sichtbaren Lichtes aus der Leuchtstofflampe 1, welches aufgrund der fehlenden Beschichtung im Bereich der Apertur 2 mit einer wesentlich höheren Leuchtdichte austritt. Die Abmessungen der Apertur 2 können hierzu unabhängig von der Größe des zu beleuchtenden Objektes zur Auskopplung von Lichtstrahlung maximaler Leuchtdichte auf die Leuchtstofflampe abgestimmt werden. In der dargestellten Ausführungsform hat die Leuchtstofflampe 1 beispielsweise eine Länge von ca. 100 mm bei einem Durchmesser von ca. 15 mm und die quadratische Apertur 2 eine Seitenlänge von ca. 5 mm.

Figur 2 zeigt eine Anzeigeeinrichtung 3 mit der in Figur 1 dargestellten Leuchtstofflampe 1 in einer seitlichen, teilweise geschnittenen Darstellung. Das Licht der Leuchtstofflampe 1 tritt durch die Apertur 2 aus und strahlt in ein als konvexe Linse 4 ausgeführtes optisches Element 5. Anschließend fällt das Licht in eine ein Farb-LCD aufweisende Flüssigkristallanzeige 6. Das dabei erzeugte Bild tritt anschließend in eine Abbildungsoptik 7 ein und kann so beispielsweise als Head-Up-Display in eine nicht dargestellte Frontscheibe eines Kraftfahrzeugs eingespiegelt werden.

Eine demgegenüber abgewandelte Ausführungsform einer Leuchtstofflampe 8 zeigt Figur 3. Hierbei weist die Leuchtstofflampe 8 eine schlitzförmige Apertur 9 auf, gegen die ein als Lichtleiter ausgeführtes optisches Element 10 unmittelbar anliegt. Das optische Element 10 besteht aus einzelnen lichtleitenden Fasern 11, die eine flexible Anordnung der Leuchtstofflampe 8 ermöglichen, so dass neben einer universellen Verwendung bei unterschiedlichen Anzeigeeinrichtungen auch eine schwenkbare Ausführungsform einer mittels des optischen Elements 10 beleuchtbaren Anzeige möglich ist. Weiterhin können die einzelnen lichtleitenden Fasern 11 im Bereich einer Lichtauskoppelfläche 12 bereits auf ein der zu beleuchtenden Anzeige entsprechendes, abgestimmtes Format (hier ein Rechteck) zusammengefasst werden.

Figur 4 zeigt eine Anzeigeeinrichtung 13 mit der in Figur 3 dargestellten Leuchtstofflampe 8 in einer teilweise geschnittenen Seitenansicht. Das in das optische Element 10 einstrahlende Licht gelangt hierbei zunächst in die Lichtauskoppelfläche 12, die gegen ein Linsenarray 14 zur Verteilung des Lichtes und damit zum Ausgleich von Helligkeitsdifferenzen anliegt. Anschließend fällt das Licht zur Erzeugung einer Bilddarstellung in eine Flüssigkristallanzeige 15. Eine nachfolgende Abbildungsoptik 16 eröffnet unterschiedliche Darstellungsmöglichkeiten, beispielsweise eine Abbildung auf einer nicht dargestellten Projektionsfläche.

## Patentansprüche

1. Anzeigeeinrichtung, insbesondere für ein Fahrzeug, mit einer Flüssigkristallanzeige, welche eine in ein optisches Element zur Beleuchtung der Flüssigkristallanzeige einstrahlende Leuchtstofflampe aufweist, die in ihrem Inneren mit einer Beschichtung zur Umwandlung von UV-Licht in sichtbares Licht versehen ist, **dadurch gekennzeichnet**, dass die Leuchtstofflampe (1, 8) in ihrer Beschichtung eine Ausnehmung (Apertur 2, 9) aufweist, durch die das Licht aus der Leuchtstofflampe (1, 8) austritt und in das optische Element (5, 10) einstrahlt.

2. Anzeigeeinrichtung nach Anspruch 1, **dadurch gekennzeichnet**, dass das optische Element (5) zur Projektion des aus der Ausnehmung (Apertur 2) austretenden Lichtes auf die Flüssigkristallanzeige (6) eine konvexe Linse (4) aufweist.

3. Anzeigeeinrichtung nach Anspruch 1 oder 2, **dadurch gekennzeichnet**, dass das optische Element (10) durch einen gegen die Ausnehmung (Apertur 9) anliegenden Lichtleiter gebildet ist.

4. Anzeigeeinrichtung nach einem der vorhergehenden Ansprüche, **dadurch gekennzeichnet**, dass das optische Element (10) einzelne lichtleitende Fasern (11) aufweist.

5. Anzeigeeinrichtung nach einem der vorhergehenden Ansprüche, **dadurch gekennzeichnet**, dass die Anzeigeeinrichtung (3, 13) zur Einspiegelung einer Abbildung in die Frontscheibe eines Kraftfahrzeuges und die Flüssigkristallanzeige (6, 15) als eine Farb-Flüssigkristallanzeige ausgeführt ist.

6. Anzeigeeinrichtung nach einem der vorhergehenden Ansprüche, **dadurch gekennzeichnet**, dass die Leuchtstofflampe (1, 8) einen Durchmesser von ca. 15 mm und die Ausnehmung (Apertur 2, 9) eine Fläche zwischen 10 mm² und 100 mm² aufweist.
